# EUROPÄISCHE PATENTSCHRIFT

(11) **EP 2 455 249 B1**
(45) Veröffentlichungstag und Bekanntmachung des Hinweises auf die Patenterteilung: **09.04.2014**
(21) Anmeldenummer: 11009180.8
(22) Anmeldetag: 18.11.2011
(51) Int. Cl.: B60K 17/35

(54) **Antriebsanordnung für temporär allradgetriebene Kraftfahrzeuge**
Drive assembly for temporary four-wheel drive vehicles
Agencement d'entraînement pour véhicules automobiles commandés temporairement par les quatre roues

(30) Priorität: 19.11.2010 DE 102010051977
(43) Veröffentlichungstag der Anmeldung: 23.05.2012
(73) Patentinhaber: Audi AG, 85045 Ingolstadt (DE)
(72) Erfinder: Märkl, Johann, 85049 Ingolstadt (DE); Weidemann, Dieter, 85134 Stammham (DE)
(74) Vertreter: Lehle, Josef

(56) Entgegenhaltungen:
- EP-B1- 0 204 665
- DE-A1-102008 030 581
- DE-C1- 3 545 545
- US-A1- 2004 104 056

## Beschreibung

Die Erfindung betrifft eine Antriebsanordnung für temporär allradgetriebene Kraftfahrzeuge gemäß dem Oberbegriff des Patentanspruches 1.

Eine gattungsgemäße Antriebanordnung beschreibt beispielsweise die EP 0 204 665 B1, bei der für ein Kraftfahrzeug mit temporärem Allradantrieb der Antrieb der Hinterachse abschaltbar ausgebildet ist. Dazu sind zur Vermeidung von Reibungs- und Panschverlusten im abschaltbaren Achsdifferenzial zwei weitere Kupplungen vorgesehen, die zusätzlich die Hinterräder des Kraftfahrzeuges trieblich abkoppeln, so dass die Getriebeelemente des abgeschalteten Achsdifferenziales stillstehen. Die beiden Kupplungen sind als formschlüssig wirkende Klauenkupplungen ausgeführt, die über zwei elektropneumatische Stellvorrichtungen betätigbar sind.

Aufgabe der Erfindung ist es, eine Antriebsanordnung der gattungsgemäßen Art vorzuschlagen, die insbesondere in der Betätigung der weiteren Kupplungen baulich, fertigungstechnisch und funktionell vorteilhafter ist.

Die Lösung dieser Aufgabe gelingt erfindungsgemäß mit den Merkmalen des Patentanspruches 1. Vorteilhafte und besonders zweckmäßige Weiterbildungen der Erfindung sind in den weiteren Patentansprüchen angeführt.

Erfindungsgemäß wird vorgeschlagen, dass die in die Antriebswellen vom Achsdifferenzial zu den Rädern eingesetzten Kupplungen mittels eines einzigen, gemeinsamen Aktuators betätigbar sind. Die Betätigung kann dabei über zusammengeschaltete Gestänge, Hebel, etc. erfolgen, die in baulich einfacher Weise auf die weiteren Kupplungen gleichzeitig wirken. Bevorzugt kann bei zum Beispiel zwei Kupplungen das beweglich in einem Gehäuse angeordnete Stellelement des Aktuators zum Beispiel auf die eine Kupplung und dessen schwimmend gelagertes Gehäuse auf die andere Kupplung wirken.

Der Aktuator betätigt somit jeweils über ein Gestänge und/oder schwenkbare Hebel und/oder Schaltgabeln die zusätzlichen Kupplungen, indem dessen verschiebbar geführtes Gehäuse quasi als zweites Stellelement fungiert. Die Schiebeführung des Gehäuses stellt nur einen marginalen Mehraufwand dar, während die Ansteuerung und der fertigungstechnische Aufwand wesentlich verringert sind. Ferner ist durch diese Art der Betätigung sichergestellt, dass die bevorzugt zwei zusätzlichen Kupplungen mit gleichem Anpressdruck gleichzeitig betätigt werden.

Alternativ zur obigen Ausführungsform kann der gemeinsame Aktuator auch in Antriebsverbindung mit einem ersten Stellelement zur Betätigung der ersten Kupplung und mit einem zweiten Stellelement zur Betätigung der zweiten Kupplung sein. Je nach Ausführungsvariante kann der Aktuator unmittelbar auf das erste und das zweite Stellelement abtreiben. Die beiden Stellelemente können dabei in zueinander gegenläufiger Richtung verstellt werden. Gegebenenfalls kann der Aktuator auch unter Zwischenschaltung einer zusätzlichen Umlenkeinrichtung mit dem ersten und dem zweiten Stellelement in Antriebsverbindung sein. Mit Hilfe der Umlenkeinrichtung kann eine zentrale Aktuator-Bewegung in die Stellbewegungen der ersten und zweiten Stellelemente aufgeteilt werden. Die Umlenkeinrichtung kann beispielhaft ein Scheren- und/oder Gestängemechanismus sein.

Die zusätzlichen Kupplungen können bevorzugt entweder als Lamellenkupplungen ausgeführt oder aber durch formschlüssig wirkende Synchronkupplungen gebildet sein. Die Synchronkupplungen können bei modifizierter Konstruktion den bei Schaltgetrieben üblichen Synchronkupplungen gegebenenfalls mit Sperrsynchronisierung entsprechen.

Der Aktuator kann durch einen Elektromotor gebildet sein, dessen Stator ringförmig in dem Gehäuse angeordnet ist und dessen drehbar gelagerter Rotor einen im Gehäuse gelagerten Kugelgewindetrieb mit einer axial verstellbaren Kugelmutter als Stellelement antreibt. Derartige Stelltriebe können hohe Betätigungskräfte bei geringen Stellmomenten übertragen und wirken in vorteilhafter Weise selbsthemmend, so dass sie die Kupplungen ohne ständigen Energieverbrauch in der geschlossenen Position halten können.

Alternativ kann der Aktuator als hydraulisch oder pneumatisch betätigter Stellzylinder ausgeführt sein, mit einem in dem zylindrischen Gehäuse axial verschiebbar geführten Stellkolben als Stellelement. Diese Ausführung ist insbesondere dann von Vorteil, wenn in dem Kraftfahrzeug bereits eine verwendbare Energiequelle bzw. ein entsprechendes Hydrauliksystem (zum Beispiel eine hydraulische Servolenkung) vorhanden ist und diese über ein entsprechendes Steuerventil anzapft.

In vorteilhafter Weiterbildung der Erfindung können die beiden Kupplungen und der Aktuator innerhalb des Gehäuses des Achsdifferenziales angeordnet sein und die Abtriebsflansche des Achsdifferenziales im geöffneten Zustand von den Antriebswellen der Räder abkoppeln. Daraus resultiert eine besonders platzsparende und robuste Konstruktion, bei der die Abstützung der auftretenden Stellkräfte und die Führung des Gehäuses des Aktuators innerhalb des Achsgetriebegehäuses erfolgen kann.

In einer weiteren, vorteilhaften Ausgestaltung der Erfindung kann die hier als erste Kupplung bezeichnete und die Hinterachse abkoppelnde Kupplung im Wechselgetriebe derart in den Kraftfluss eingeschaltet sein, dass bei geöffneter erster Kupplung zugleich Elemente stillgesetzt sind, die bei geschlossener erster Kupplung auf das abschaltbare Achsdifferenzial abtreiben. Damit kann der Gesamtwirkungsgrad der Antriebsanordnung weiter verbessert werden.

Schließlich wird zur Erzielung einer funktionell günstigen Getriebesteuerung vorgeschlagen, dass der Aktuator für die beiden Kupplungen über ein elektronisches und/oder hydraulisches Steuergerät in die Getriebesteuerung des Wechselgetriebes derart eingebunden ist, dass durch Schließen zunächst der beiden Kupplungen die stillgesetzten Getriebeelemente des Achsdifferenziales und gegebenenfalls des Wechselgetriebes an die Räder der abgekoppelten Achse angekuppelt werden und dass anschließend die erste Kupplung geschlossen wird. Damit ist sichergestellt, dass an den beiden Kupplungen keine unzulässig hohen Antriebsmomente im Zugbetrieb und/oder Schubbetrieb des Kraftfahrzeuges bei deren Schaltübergängen auftreten können.

Ferner wird ein Verfahren zum Betätigen der Antriebsanordnung beansprucht, mit dem sich die zuvor genannten Vorteile erzielen lassen.

Nachfolgend sind Ausführungsbeispiele der Erfindung anhand der beigefügten Figuren beschrieben.

Es zeigen:
- Fig. 1: in einer Prinzipdarstellung eine Antriebsanordnung für ein Kraftfahrzeug mit einem Geschwindigkeits-Wechselgetriebe mit integriertem Vorderachsdifferenzial und einem Hinterachsdifferenzial, das über drei Kupplungen abschaltbar ist; sowie
- Fig. 2 bis 4: jeweils unterschiedliche Ausführungsvarianten eines Aktuators, wie er in der Antriebsanordnung der Fig. 1 verwendet wird.

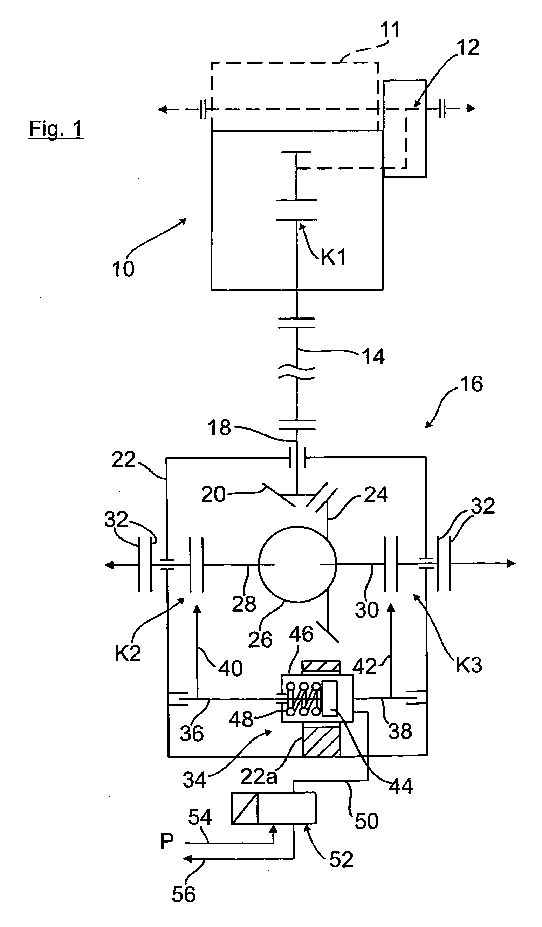

In Fig. 1 ist mit 10 ein Geschwindigkeits-Wechselgetriebe bezeichnet, das an eine Antriebsmaschine 11 (in gestrichelten Linien angedeutet) angeflanscht ist. Das Wechselgetriebe 10 treibt zum Beispiel auf ein integriertes bzw. seitlich angebautes Vorderachsdifferenzial 12 ab und kann über eine zum Beispiel im Wechselgetriebe 10 angeordnete, erste Kupplung K1 trieblich vom Hinterachsdifferenzial 16 abgekoppelt werden.

Das Wechselgetriebe 10 treibt somit (ggf. unter Zwischenschaltung eines nicht dargestellten überbrückbaren Verteilerdifferenziales) nach vorne auf das Vorderachsdifferenzial 12 und nach hinten über eine Kardanwelle 14 auf das Hinterachsdifferenzial 16 zum Antrieb der hinteren Räder des Kraftfahrzeuges, wobei dann die Kupplung K1 geschlossen ist.

Das Achsgetriebe 16 ist ein Kegelradgetriebe bzw. -differenzial bekannter Bauart, dessen Antriebswelle 18 mit Antriebsritzel 20 im Achsgehäuse 22 drehbar gelagert ist und ein Tellerrad 24 mit Ausgleichsgehäuse 26 antreibt.

In dem Ausgleichsgehäuse 26 sind in bekannter Weise Planetenräder und Abtriebskegelräder (nicht dargestellt) gelagert, wobei letztere auf Antriebshalbwellen 28, 30 abtreiben. Die Antriebshalbwellen 28, 30 sind aus dem Achsgehäuse 22 herausgeführt und über Flansche 32 an nicht dargestellte, mit den hinteren Rädern des Kraftfahrzeuges trieblich verbundene Gelenkwellen angeschlossen.

Innerhalb des Achsgehäuses 22 sind in die Antriebshalbwellen 28, 30 zwei Kupplungen K2, K3 eingeschaltet, mittels denen im geöffneten Zustand die hinteren Räder des Kraftfahrzeuges trieblich abkoppelbar sind.

Zur Betätigung der Kupplungen K2 und K3 ist ein in das Achsgehäuse 22 integrierten Aktuator 34 eingesetzt, der über beidseitige Stellstangen 36, 38 und nur angedeutete Schaltgabeln oder -hebeln 40, 42 die als Synchronkupplungen ausgeführten Kupplungen K2, K3 beaufschlagt. Die Schaltgabeln 40, 42 greifen dabei in bekannter Weise (nicht dargestellt) in ringförmige Nuten von Schaltmuffen der Synchronkupplungen ein und verbinden im geschlossenen Zustand den Kupplungskörper auf dem einen Abschnitt der Antriebshalbwellen 28, 30 mit einem Kupplungszahnrad auf dem jeweils anderen Abschnitt der Antriebshalbwellen 28, 30.

Die im Achsgehäuse 22 verschiebbar geführte Stellstange 36 ist mit einem Stellkolben 44 fest verbunden, der in einem zylindrischen Gehäuse 46 des Aktuators 34 axial verschiebbar geführt ist.

Die andere Stellstange 38 ist mit dem Gehäuse 46 des Aktuators 34 fest verbunden, wobei das Gehäuse 46 in einer Lagerkonsole 22a des Achsgehäuses 22 axial verschiebbar (schwimmend) aufgenommen ist. Innerhalb des Gehäuses 46 ist ferner eine auf den Stellkolben 44 wirkende Rückstellfeder 48 eingesetzt.

Der Aktuator 34 bzw. dessen Gehäuse 46 ist über eine Hydraulikleitung 50 an ein hydraulisches Steuerventil 52 angeschlossen und kann über dieses elektromagnetisch gesteuert mit einer Druckleitung 54 oder einer Rücklaufleitung 56 verbunden werden.

Das Steuerventil 52 ist an ein nicht dargestelltes Hydrauliksystem mit einer Druckquelle (zum Beispiel ein Servolenkungssystem, etc.) angeschlossen und wird über eine elektronische Getriebesteuerung (oder ein Motormanagement) des Kraftfahrzeuges angesteuert.

Durch Druckbeaufschlagung des Aktuators 34 fährt der Stellkolben 44 mit der Stellstange 36 auf der Zeichnung nach links aus, während durch Reaktionskraft das Gehäuse 46 des Aktuators 34 mit der Stellstange 38 nach rechts verfahren wird. Die beiden Kupplungen K2, K3 sind konstruktiv so ausgelegt, dass mit der gegensinnigen Bewegung der Schaltelemente 36, 40 bzw. 38, 42 die beiden Kupplungen K2, K3 geschlossen werden.

Ist der Aktuator 34 bzw. dessen Gehäuse 46 über das Steuerventil 52 drucklos geschaltet, so werden durch die Vorspannkraft der Rückstellfeder 48 beide Kupplungen K2, K3 geöffnet, so dass bei ebenfalls geöffneter Kupplung K1 im Wechselgetriebe 10 die treibenden Getriebeelemente im Teilgetriebe II und die Getriebeelemente im Achsdifferenzial 16 im Kraftfluss bis zu den Kupplungen K2, K3 stillstehen, also keine Wirkungsgradverluste verursachen.

Die Erfindung ist nicht auf das vorstehend beschriebene Ausführungsbeispiel beschränkt.

Anstelle der Synchronkupplungen als Kupplungen K2, K3 können auch nass laufende Lamellenkupplungen verwendet sein, die zum Beispiel über schwenkbar gelagerte Stellhebel und Anpressscheiben betätigt bzw. geschlossen werden und die nicht formschlüssig sondern stufenlos reibschlüssig wirken.

Anstelle einer hydraulischen oder pneumatischen Betätigung der Kupplungen K2, K3 kann auch in vorteilhafter Weise eine elektromechanische Betätigung über einen Elektromotor und einen Kugelgewindetrieb vorgesehen sein, wobei über den Rotor des Elektromotors zum Beispiel eine Stellspindel angetrieben ist, auf der eine Kugelmutter axial verschiebbar gelagert ist. Die Kugelmutter wirkt dann auf die eine Stellstange (zum Beispiel 36), während das den ringförmigen Stator tragende axial verschiebbare Gehäuse des Elektromotors mit der anderen Stellstange 38 (oder einem geeigneten Gestänge mit Stellhebeln) trieblich verbunden ist.

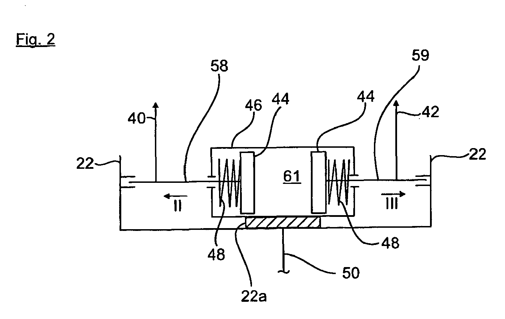

Im Unterschied zur Fig. 1 kann der Aktuator 34 gemäß den Fig. 2 bis 4 auch mit seinem Gehäuse 46 unverschiebbar ausgeführt sein. In diesem Fall kann der Aktuator 34 über, nach beiden Seiten abtreibende Stellelemente 58, 59 die beiden Kupplungen K2, K3 beaufschlagen. Dazu sind die beiden Kupplungen K2, K3 konstruktiv auf die daraus resultierende, gleichsinnige Betätigung auszulegen. Alternativ zu dem in der Fig. 1 gezeigten Hydraulik-Aktuator 34 kann dieser auch pneumatisch, elektromotorisch oder elektromagnetisch betätigbar ausgeführt sein. Maßgeblich ist alleine, dass beide Kupplungen K2, K3 nur über einen einzigen gemeinsamen Aktuator 34 betätigt sind, der gleichmäßig auf beide Kupplungen wirkt.

Weitere beispielhafte Ausführungen des Aktuators 34 sind in den Fig. 2 bis 4 gezeigt. In der Fig. 2 ist der Aktuator 34, wie in der Fig. 1, eine hydraulisch betätigbare Kolben-Zylinder-Einheit. Im Unterschied zum Aktuator 34 der Fig. 1 ist jedoch der Stellzylinder 46 nicht schwimmend in der Lagerkonsole 22a des Achsgehäuses 22 aufgenommen, sondern vielmehr ortsfest in der Lagerkonsole 22a befestigt. Im Stellzylinder 46 sind zudem zwei Stellkolben 44 axial verschiebbar geführt. Die Stellkolben 44 treiben auf zueinander gegenüberliegenden Seiten mittels damit verbundener Stellelemente 58, 59 auf die Schaltgabeln 40, 42 ab. Zwischen den beiden Stellkolben 44 ist eine mittlere Arbeitskammer 61 definiert, die mit Hilfe eines hydraulischen Steuerkreislaufes (in der Fig. 2 ist lediglich eine Hydraulikleitung 50 gezeigt) mit Steuerdruck beaufschlagbar ist. An den, von der Arbeitskammer 61 abgewandten Seiten sind die Stellkolben 44 jeweils mit Rückstellfedern 48 abgestützt. Diese verlagern die beiden Stellkolben 44 bei Druckentlastung zurück in eine Ruhelage, in der die beiden Kupplungen K2, K3 geöffnet sind. Alternativ zu den Rückstellfedern 48 ist auch eine Druckbeaufschlagung der axial äußeren Kammern mit einem entsprechenden Steuerventil (nicht dargestellt) denkbar.

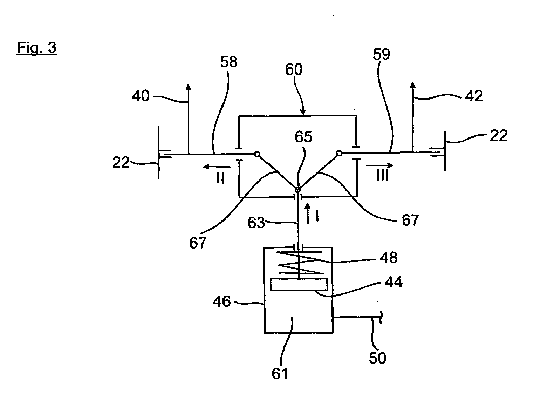

In der Fig. 3 ist der Aktuator 34 ebenfalls als eine hydraulisch betätigbare Kolben-Zylinder-Einheit ausgeführt, bei der eine mit dem Stellkolben 44 verbundene Kolbenstange 63 über einen Knotenpunkt 65 gelenkig mit Umlenkhebeln 67 verbunden ist. Die beiden Umlenkhebel 67 bilden zusammen mit der Kolbenstange 63 einen eine Umlenkeinrichtung 60, mit der eine zentrale Aktuator-Bewegung I der Kolbenstange 63 in die beiden zueinander gegenläufigen Stellbewegungen II, III der beiden Stellelemente 58, 59 umgewandelt wird. Diese sind wiederum, wie bereits in den vorangegangenen Figuren beschrieben, mit den Schaltgabeln 40, 42 in Verbindung. Bei Druckbeaufschlagung der Arbeitskammer 61 kann daher der gemeinsame Aktuator 34 die beiden Stellelemente 58, 59 zueinander gegenläufig bewegen.

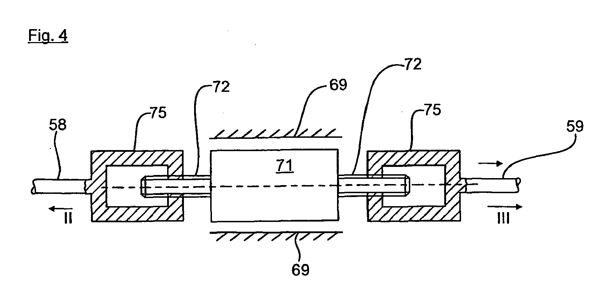

In der Fig.4 ist der Aktuator beispielhaft elektromotorisch/-magnetisch ausgeführt, und zwar mit einem ortsfest angeordneten Stator 69, der radial außenseitig einen drehbar gelagerten Rotor 71 umgibt. Der Rotor 71 ist an seinen beiden Stirnseiten axial mit einander gegenüberliegenden Antriebsspindeln 72 verlängert. Diese sind in Gewindeeingriff mit Stellmuttern 75, an die sich jeweils seitlich nach außen die Stellelemente 58, 59 anschließen. Durch Drehbetätigung des Rotors 71 können somit die beiden Stellelemente 58, 59 zueinander gegensinnig auseinander oder aufeinander zubewegt werden, um die Kupplungen K2 und K3 gemeinsam zu öffnen oder zu schließen.

## Patentansprüche

1. Antriebsanordnung für temporär allradgetriebene Kraftfahrzeuge, mit einem Geschwindigkeits-Wechselgetriebe, das auf ein Vorderachsdifferenzial für den Antrieb der vorderen Räder des Kraftfahrzeuges und auf ein Hinterachsdifferenzial für den Antrieb der hinteren Räder des Kraftfahrzeuges abtreibt, wobei über eine Kupplung der Antrieb zu einem Achsdifferenzial abschaltbar ist und zwischen diesem Achsdifferenzial und den angetriebenen Rädern mehrere, insbesondere zwei weitere Kupplungen vorgesehen sind, über die bei geöffneter erster Kupplung das Achsdifferenzial stillsetzbar ist, **dadurch gekennzeichnet, dass** die in die Antriebswellen (28, 30) vom Achsdifferenzial (16) zu den Rädern eingesetzten Kupplungen (K2, K3) mittels eines einzigen, gemeinsamen Aktuators (34) betätigt sind.

2. Antriebsanordnung nach Anspruch 1, **dadurch gekennzeichnet, dass** das beweglich in einem Gehäuse (46) angeordnete Stellelement (44) des Aktuators (34) auf eine erste der zusätzlichen Kupplungen (K2) und dessen schwimmend gelagertes Gehäuse (46) auf eine zweite der zusätzlichen Kupplungen (K3) wirkt.

3. Antriebsanordnung nach Anspruch 1, **dadurch gekennzeichnet, dass** der Aktuator (34) in Antriebsverbindung mit einem ersten Stellelement (58) zur Betätigung der ersten Kupplung (K2) und mit einem zweiten Stellelement (59) zur Betätigung der zweiten Kupplung (K3) ist.

4. Antriebsanordnung nach Anspruch 3, **dadurch gekennzeichnet, dass** die ersten und zweiten Stellelemente (58, 59) in zueinander gegenläufiger Richtung (II, III) vom Aktuator (34) verstellbar sind.

5. Antriebsanordnung nach Anspruch 3 oder 4, **dadurch gekennzeichnet, dass** der Aktuator (34) unter Zwischenschaltung einer Umlenkeinrichtung (60), insbesondere ein Scheren- und/oder Gestängemechanismus, mit den ersten und zweiten Stellelementen (58, 59) in Antriebsverbindung ist, mit welcher Umlenkeinrichtung (60) eine zentrale Aktuator-Bewegung (I) in die Stellbewegungen (II, III) der ersten und zweiten Stellelemente (58, 59) aufteilbar ist.

6. Antriebsanordnung nach einem der vorhergehenden Ansprüche, **dadurch gekennzeichnet, dass** die beiden Kupplungen (K2, K3) Lamellenkupplungen sind.

7. Antriebsanordnung nach einem der vorhergehenden Ansprüche, **dadurch gekennzeichnet, dass** die beiden Kupplungen (K2, K3) durch formschlüssige Kupplungen, insbesondere Synchronkupplungen, gebildet sind.

8. Antriebsanordnung nach zumindest einem der vorhergehenden Ansprüche, **dadurch gekennzeichnet, dass** der Aktuator (34) durch einen Elektromotor gebildet ist, dessen ringförmiger Stator in dem Gehäuse angeordnet ist und dessen drehbar gelagerter Rotor einen im Gehäuse gelagerten Gewindetrieb mit zumindest einer axial verstellbaren Gewindemutter als Stellelement (58, 59) antreibt, insbesondere einen Kugelgewindetrieb mit einer axial verstellbaren Kugelmutter als Stellelement antreibt.

9. Antriebsanordnung nach einem der Ansprüche 1 bis 7, **dadurch gekennzeichnet, dass** der Aktuator (34) eine hydraulisch oder pneumatisch betätigbare Kolben-Zylinder-Einheit ist, bei der in einem Stellzylinder (46) zumindest ein mit einem Stellelement (58, 59) verbundener Stellkolben (44) axial verschiebbar geführt ist.

10. Antriebsanordnung nach einem oder mehreren der vorhergehenden Ansprüche, **dadurch gekennzeichnet, dass** die zusätzlichen Kupplungen (K2, K3) und der Aktuator (34) innerhalb des Achsgehäuses (22) des Achsdifferenzials (16) angeordnet sind und die Abtriebsflansche (32) des Achsdifferenziales (16) im geöffneten Zustand der Kupplungen (K2, K3) von den Antriebswellen der Räder abkoppeln.

11. Antriebsanordnung nach einem oder mehreren der vorhergehenden Ansprüche, **dadurch gekennzeichnet, dass** der Aktuator (34) für die zusätzlichen Kupplungen (K2, K3) über ein Steuergerät, vorzugsweise ein elektronisches und/oder hydraulisches Steuergerät, in die Getriebesteuerung des Wechselgetriebes (10) eingebunden ist.

## Claims

1. Drive assembly for temporarily all-wheel-drive motor vehicles, comprising a speed-change gearbox which outputs to a front axle differential for driving the front wheels of the motor vehicle and to a rear axle differential for driving the rear wheels of the motor vehicle, it being possible to disengage the drive to one axle differential via a clutch, and a plurality of, more particularly two, additional clutches being provided between said axle differential and the driven wheels, via which clutches the axle differential can be stopped when the first clutch is opened, **characterised in that** the clutches (K2, K3) inserted into the drive shafts (28, 30) from the axle differential (16) towards the wheels are actuated by means of a single common actuator (34).

2. Drive assembly according to claim 1, **characterised in that** the control element (44) of the actuator (34) which is movably arranged in a housing (46) acts on a first of the additional clutches (K2) and the floating housing (46) of said control element acts on a second of the additional clutches (K3).

3. Drive assembly according to claim 1, **characterised in that** the actuator (34) is connected in a driven manner to a first control element (58) for actuating the first clutch (K2) and to a second control element (59) for actuating the second clutch (K3).

4. Drive assembly according to claim 3, **characterised in that** the first and second control elements (58, 59) can be moved in opposite directions (II, III) by the actuator (34).

5. Drive assembly according to either claim 3 or claim 4, **characterised in that** the actuator (34) is connected in a driven manner to the first and second control elements (58, 59) by interposing a deflection device (60), more particularly a scissor and/or linkage mechanism, by means of which deflection device (60) a central actuator movement (I) can be divided into the control movements (II, III) of the first and second control elements (58, 59).

6. Drive assembly according to any of the preceding claims, **characterised in that** the two clutches (K2, K3) are multi-plate clutches.

7. Drive assembly according to any of the preceding claims, **characterised in that** the two clutches (K2, K3) are formed by interlocking clutches, more particularly synchronous clutches.

8. Drive assembly according to at least one of the preceding claims, **characterised in that** the actuator (34) is formed by an electric motor, the annular stator of which is arranged in the housing and the rotatably mounted rotor of which drives a screw drive which is mounted in the housing and comprises at least one axially adjustable threaded nut as a control element (58, 59), more particularly drives a ball screw comprising an axially adjustable ball nut as a control element.

9. Drive assembly according to any of claims 1 to 7, **characterised in that** the actuator (34) is a hydraulically or pneumatically actuatable piston-cylinder unit in which at least one setting piston (44), which is connected to a control element (58, 59), is axially displaceably guided in an actuating cylinder (46).

10. Drive assembly according to one or more of the preceding claims, **characterised in that** the additional clutches (K2, K3) and the actuator (34) are arranged within the axle housing (22) of the axle differential (16) and uncouple the output flanges (32) of the axle differential (16) from the drive shafts of the wheels when the clutches (K2, K3) are open.

11. Drive assembly according to one or more of the preceding claims, **characterised in that** the actuator (34) for the additional clutches (K2, K3) is integrated into the transmission control system of the gearbox (10) via a control device, preferably an electronic and/or hydraulic control device.

## Revendications

1. Dispositif d'entraînement pour véhicules automobiles à transmission intégrale temporaire, avec une boîte de vitesses qui agit sur un différentiel d'essieu avant pour l'entraînement des roues avant du véhicule automobile et sur un différentiel d'essieu arrière pour l'entraînement des roues arrière du véhicule automobile, l'entraînement d'un différentiel d'essieu pouvant être coupé par l'intermédiaire d'un embrayage et plusieurs, notamment deux, autres embrayages étant prévus entre ce différentiel d'essieu et les roues entraînées, embrayages par l'intermédiaire desquels le différentiel d'essieu peut être arrêté lorsque le premier embrayage est ouvert, **caractérisé en ce que** les embrayages (K2, K3) utilisés dans les arbres d'entraînement (28, 30) du différentiel d'essieu (16) aux roues sont actionnés au moyen d'un seul actionneur commun (34).

2. Dispositif d'entraînement selon la revendication 1, **caractérisé en ce que** l'élément de positionnement (44), agencé mobile dans un carter (46), de l'actionneur (34) agit sur l'un des embrayages supplémentaires (K2) et ledit carter (46) logé flottant agit sur l'autre embrayage supplémentaire (K3).

3. Dispositif d'entraînement selon la revendication 1, **caractérisé en ce que** l'actionneur (34) est en liaison de transmission avec un premier élément de positionnement (58) pour actionner le premier embrayage (K2) et avec un deuxième élément de positionnement (59) pour actionner le deuxième embrayage (K3).

4. Dispositif d'entraînement selon la revendication 3, **caractérisé en ce que** le premier et le deuxième élément de positionnement (58, 59) sont déplaçables par l'actionneur (34) dans des directions opposées (II, III).

5. Dispositif d'entraînement selon la revendication 3 ou 4, **caractérisé en ce que** l'actionneur (34) est en liaison de transmission, avec interposition d'un dispositif de renvoi (60), notamment d'un mécanisme de ciseaux et/ou de biellettes, avec le premier et le deuxième élément de positionnement (58, 59), dispositif de renvoi (60) avec lequel un mouvement d'actionneur central (I) peut être divisé en mouvements de positionnement (II, III) du premier et du deuxième élément de positionnement (58, 59).

6. Dispositif d'entraînement selon l'une des revendications précédentes, **caractérisé en ce que** les deux embrayages (K2, K3) sont des embrayages à disques.

7. Dispositif d'entraînement selon l'une des revendications précédentes, **caractérisé en ce que** les deux embrayages (K2, K3) sont formés par des embrayages par concordance de forme, notamment des embrayages synchrones.

8. Dispositif d'entraînement selon au moins l'une des revendications précédentes, **caractérisé en ce que** l'actionneur (34) est formé par un moteur électrique dont le stator annulaire est agencé dans un carter et dont le rotor logé rotatif entraîne une vis logée dans le carter avec au moins un écrou pouvant être déplacé de façon axiale comme élément de positionnement (58, 59), notamment une vis à billes avec un écrou sphérique pouvant être déplacé de façon axiale comme élément de positionnement.

9. Dispositif d'entraînement selon l'une des revendications 1 à 7, **caractérisé en ce que** l'actionneur (34) est une unité piston-cylindre qui est actionnable de façon hydraulique ou pneumatique et dans laquelle au moins un piston de positionnement (44) relié à l'élément de positionnement (58, 59) est guidé, de façon à pouvoir être déplacé de façon axiale, dans un cylindre de positionnement (46).

10. Dispositif d'entraînement selon une ou plusieurs des revendications précédentes, **caractérisé en ce que** les embrayages supplémentaires (K2, K3) et l'actionneur (34) sont agencés à l'intérieur du carter d'essieu (22) du différentiel d'essieu (16) et **en ce que** les flasques de sortie (32) du différentiel d'essieu (16) assurent le découplage des arbres d'entraînement des roues lorsque les embrayages (K2, K3) sont ouverts.

11. Dispositif d'entraînement selon une ou plusieurs des revendications précédentes, **caractérisé en ce que** l'actionneur (34) pour les embrayages supplémentaires (K2, K3) est intégré par l'intermédiaire d'un appareil de commande, de préférence un appareil de commande électronique et/ou hydraulique, dans la commande de transmission de la boîte de vitesses (10).
